# EUROPEAN PATENT SPECIFICATION

(11) **EP 2 082 603 B1**
(45) Date of publication and mention of the grant of the patent: **06.06.2018**
(21) Application number: 07835430.5
(22) Date of filing: 14.11.2007
(51) Int. Cl.: H04W 24/02, H04W 36/00

(54) **TRANSMISSION OF SPECIAL NEIGHBOR CELL LISTS**
ÜBERTRAGUNG VON SPEZIALNACHBAR-ZELLENLISTEN
TRANSMISSION DE LISTES DE CELLULES VOISINES SPÉCIALES

(30) Priority: 17.11.2006 SE 0602485
(43) Date of publication of application: 29.07.2009
(73) Proprietor: Telefonaktiebolaget LM Ericsson (publ), 164 83 Stockholm (SE)
(72) Inventor: VUKAJLOVIC, Vera, 113 49 Stockholm (SE); BERGSTRÖM, Karl Olof Joakim, 114 30 Stockholm (SE)
(74) Representative: Ericsson
(86) International application number: PCT/SE2007/050847
(87) International publication number: WO 2008/060236

(56) References cited:
- EP-A1- 1 628 497
- WO-A1-2008/081315
- WO-A1-2008/102252
- WO-A2-02/065789
- SIEMENS: "LTE neighbourhood list and measurement organisation Document: Discussion and decision", 3GPP DRAFT; R2-063189, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132688, [retrieved on 2006-11-01]
- LG ELECTRONICS INC: "LTE neighbouring list optimisation", 3GPP DRAFT; R2-070690 REDUCTION OF SIZE OF NEIGHBOURING CELL LIST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070212 - 20070216, 9 February 2007 (2007-02-09), XP050602925, [retrieved on 2007-02-09]
- ERICSSON: "Summary of e-mail discussion Proposal to remove Neighbor Cell Information in E-UTRA", 3GPP DRAFT; R2-070561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Louis, USA; 20070220, 20 February 2007 (2007-02-20), XP050133614, [retrieved on 2007-02-20]
- HUAWEI: "Blacklist maintenance", 3GPP DRAFT; R2-071155, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134130, [retrieved on 2007-03-22]
- LG ELECTRONICS INC: "Neighbouring cell list organisation", 3GPP DRAFT; R2-063385_NEIGHBOURING CELL ORGANISATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061106 - 20061110, 1 November 2006 (2006-11-01), XP050602828, [retrieved on 2006-11-01]
- ERICSSON: "Reduction of neighbour cell list information sent to UE", 3GPP DRAFT; R2-063305, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132788, [retrieved on 2006-11-01]
- NOKIA (RAPPORTEUR): "System Information Classification", 3GPP DRAFT; R2-063077 SI CLASSIFICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Riga, Latvia; 20061101, 1 November 2006 (2006-11-01), XP050132586, [retrieved on 2006-11-01]
- '3rd Generation Partnership Project; Technical Specification Group Radio Access Network; Radio Resource Control (RRC); Protocol Specification (Release 5)' 3GPP TS 25.331 V5.18.0, [Online] September 2006, XP003022070 Retrieved from the Internet: <URL:http://www.3gpp.org/ftp/Specs/archives /25_series/25.331/25331-510.zip>
- '3rd Generation Partnership Project; Technical Specification Group Radio Access Network; User Equipment (UE) procedures in idle mode and procedures for cell reselection in connected mode (Release 7)' 3GPP TS 25.304 V7.0.0, [Online] March 2006, XP003022071 Retrieved from the Internet: <URL:http://www.3gpp.org/ftp/Specs/archive/ 25_series/25.304/25304-700.zip>
- '3rd Generation Partnership Project; Technical Specification Group Radio Access Network; Requirements for Support of radio resource management (FDD) (Release 7)' 3GPP TS 25.133 V7.5.0, [Online] October 2006, XP003022072 Retrieved from the Internet: <URL:http://www.3gpp.org/ftp/Specs/archive/ 25_series/25.133/25133-750.zip>
- ERICSSON: 'Reduction of neighbour cell list information sent to UE' 3GPP TSG-RAN WG2 #56, RIGA, LATVIA, [Online] vol. R2-063305, 06 November 2006 - 10 November 2006, XP003022073 Retrieved from the Internet: <URL:http://www.3gpp.org/ftp/tsg_ran/WG2_RL 2/TSGR2_56/Documents/R2-063305.zip>
- ERICSSON: 'Summary of e-mail discussion, Proposal to remove Neighbour Cell Information in E-UTRA' 3GPP TSG-RAN WG2 #57, ST. LOUIS, MISSOURI, [Online] vol. R2-070561, 12 February 2007 - 16 February 2007, XP003022074 Retrieved from the Internet: <URL:http://www.3gpp.org/ftp/tsg_ran/WG2/RL 2/TSGR2_57/Documents/R2-070561.zip>

## Description

### TECHNICAL FIELD

The technology described here relates to cellular radio communications, and more particularly, to efficiently managing neighboring cell information.

### BACKGROUND

Mobile radio stations, sometimes referred to as mobile terminals or user equipment (UE), are commonplace in cellular communications. When the mobile station is "attached" to a radio access network (RAN), it can be either in an idle state in which it is not involved in an active communication, e.g., a communication with another subscriber or content server, or in a connected mode in which the mobile station is engaged in an active connection. Although the states of a mobile may be have different labels and different systems, the term "idle" is used here to describe any state in which the mobile station is powered on but not actively participating in an active communication. During an idle state, the mobile station may select, register with, or "camp on" a cell in order to obtain service from that cell when desired by the mobile subscriber or when an incoming call is made to the mobile subscriber. An idle mobile station automatically performs a cell reselection procedure in which the mobile station reads system information broadcast by various cell, including the serving cell in which the mobile station is currently located or registered as well as neighboring cells, to determine whether to select another cell to camp on. Once a cell reselection occurs, the network will receive a location update message from the mobile station indicating that the mobile station has moved into a new area requiring it to update its location and providing update location information, e.g., cell, location area, routing area, etc., which may be used to page the mobile station.

In addition to broadcasting system information, each cell also typically transmits a list of its "neighbor" cells in order to ease the task of identifying new cells for the mobile station as it moves throughout the cellular network. Such neighbor cell lists are employed for example in the GSM and UMTS based cellular systems. In a mobile-based mobility approach, the mobile station reads the neighbor list from each cell's system broadcast information, and when it detects that a cell on that list is "better" than its current cell, e.g., is sending a stronger signal (or any other re-selection criterion), it reselects that neighboring cell as its serving cell. The mobile station may send (depending on its state) an update message to the radio access network indicating its new serving cell as mentioned above if required to update its location. For network-controlled mobility, the mobile station normally receives a neighbor cell list with a dedicated message(s) with neighbor cells operating on that same frequency from the network via a dedicated message. In addition, the mobile station may receive additional neighbor cell lists for neighbors on other frequencies and for other radio access technologies (RATs) to allow for mobility to other frequencies or access technologies. When the mobile station detects that a pilot signal from a neighboring cell is sufficiently strong to make that neighboring cell a good candidate for re-selection, the mobile sends a measurement report according to one or more defined conditions and associated with that neighboring cell back to the network. The network uses the report for handover operations. Example conditions include a change of best cell or detection of a new cell with a measured value within a certain range compared to the best cell or current cell.

A mobile radio station can be forbidden or prevented from re-selecting one of a group of cells based on a subscription restriction. In GSM and UMTS, this is implemented using a forbidden location area (LA). A location area includes a group of cells used to locate the approximate position of idle mobiles. In idle mode when the mobile station moves to a new location area, it sends a location registration update message indicating to the radio network indicating its movement to a new location area. In response to this location registration update message, the network may inform the mobile radio that this particular location area is forbidden for this specific mobile radio, e.g., because of various roaming restrictions. Because this forbidden location area feature is controlled in the core network rather than the radio access network, the mobile station must attempt a location registration in order to discover that it cannot re-select to a particular forbidden cell. After a mobile station tries and fails to register to a cell within a forbidden location area (LA), it may receive a forbidden LA list from the network in order to avoid further attempts to LAs that the network knows in advance will also fail. By reading the LA identity broadcasted in each cell, the mobile station can avoid making further attempts to cells that belong to forbidden LAs according to that stored LA list.

System broadcast information is repeatedly transmitted and must be sent over the entire cell resulting in significant bandwidth and power consumption. A drawback with transmitting neighbor cell lists is the significant amount of data that must be transmitted over the air interface with the regularly sent system broadcast messages from each cell. One approach to solving this problem is to not send neighboring cell information. But not sending neighbor cell lists causes its own problem with respect to forbidden cells. For mobile radio based mobility, the mobile radio will detect and try unsuccessfully to register to forbidden cells, resulting in a waste of measurement resources in the mobile station and radio resources in the cellular radio communication system because of the failed attempted registrations. Moreover, while the mobile is preoccupied with trying to connect to a forbidden cell, it may even lose its connection with its current serving cell. For network-controlled mobility, the mobile station receives dedicated messages with neighbor cells that are updated as the mobile station moves in the network. Based on the neighbor list, the mobile radio must create and send cell measurement reports back to the network. Similar to mobile station-based mobility, transmitting neighbor cell lists consumes radio resources and in addition there is also a waste of resources if the mobile is measuring forbidden cells. Because measurement reports usually are limited in size and can only report a limited number of the best cells, it is possible that the mobile radio may only be able to include forbidden cells if they happen to be detected as having the best signal strengths by the mobile. In that case, the network receives no information of allowed cells.

What is needed is a better balance between sending extensive neighbor cell lists on a regular basis with broadcast signaling or dedicated messages and not sending any neighbor cell list which can result in wasted procedures and resources.
The document WO02/065789 relates to a method for determining whether to grant access of a user equipment for a radio access network where an access node can provide a list of allowed or forbidden cells to a user equipment.
The document WO2008/081315 discloses a forbidden neighbor cell list that allows an operator to provide a list of forbidden cells with regard to which a user equipment does not have to search and report.

### SUMMARY

These and other problems are overcome by broadcasting a "special neighbor" cell list to mobile radios in a cellular radio communications system. Mobile radios detect a broadcast signal or dedicated message from a serving cell currently serving the mobile radio. Before performing measurements associated with another cell, before sending signals to another cell, or generating a measurement report associated with another cell, the mobile determines from the broadcast signal or dedicated message a special neighbor cell list. Based on the special neighbor list of cells, the mobile radio determines a cell to select, to send signals to, or to generate an associated measurement report related to signals sent from the determined cell. Thereafter, the mobile radio selects, sends signals to, or monitors signals for measurement reporting from the determined cell.

The list may be sent in a form that is detectable by any mobile radio, regardless of subscription, or sent only to one mobile station. The list may be sent with either of two different transmission options as a broadcasted signal or as one or several dedicated message(s). Typically, when using the broadcast option, the list is sent to multiple mobile stations, and when using the dedicated message option, the list is sent only to one mobile station. When the broadcasted list changes, the mobile radios can immediately detect that change in a subsequent broadcast signal from the serving cell including the changed broadcast list. For a dedicated message option, the mobile station detects a change in the list when it receives a new message from the radio network. For both transmission options, the network decides if and when the list of neighbors should be updated and then sends a new broadcast or dedicated message with updated cell list information.

In one non-limiting example implementation, the broadcast list or dedicated message includes one or more prohibited cells that the mobile radio is prohibited from obtaining service such that the mobile radio is free to request service from any cell that is not listed. The mobile radio advantageously avoids monitoring signals from the one or more prohibited cells and avoids sending signals to the one or more prohibited cells and avoids generating measurement reports associated with one or more prohibited cells. The list preferably also includes one or more special selectable cells that the mobile radio may obtain service from but for which the mobile must take into account one or more factors not normally considered for other neighboring cells. A signal is detected from a special selectable cell on the list, and a measurement report may be generated for that special selectable cell. The measurement report can then be sent to a radio access network node. In addition, the mobile may select and obtain service from a special selectable cell. The list may include an identifier associated with each cell in the list and possibly one or more of the following parameters: an allowed cell/not allowed cell indicator, a power offset, and an antenna configuration associated with the cell.

From the network perspective, a radio access network node determines a list of special neighbor cells including one or more neighboring cells that mobile radios are forbidden to select and one or more special selectable neighboring cells that mobile radios should be treated differently from other neighboring cells that the mobile radios can select. Other neighboring cells are not included in the list of special neighbor cells. The list of special neighbor cells is broadcast from a serving cell or is sent with dedicated signaling to the mobile station depending on whether mobile station-based or network-controlled mobility is used. The list of special neighbor cells may be broadcast in a form that is detectable by any mobile radio regardless of subscription or may be sent as a dedicated message so that it is detectable by only one mobile station. As mentioned above, when the list of special neighbor cells changes, the changed list can be immediately transmitted from the serving cell.

This technology eliminates the need to send to mobile radios what can be a very long, traditional neighbor cell list to reduce the signaling bandwidth and power requirements associated therewith. Mobile radios can avoid monitoring, measuring, and communicating with forbidden cells and generating and sending measurement reports for forbidden cells, which further eliminates unnecessary signaling and processing. On the other hand, the technology allows operators to enhance or de-emphasize available neighbor cells as desired using one or more parameters included on the list.

### BRIEF DESCRIPTION OF THE DRAWINGS

Figure 1 illustrates an example cellular communication system;
Figure 2 is a function block diagram of an example mobile station;
Figure 3 is a diagram illustrating a group of neighboring cells including multiple forbidden cells;
Figure 4 is function block diagram of an example radio access node;
Figure 5 is a flowchart illustrating non-limiting, example procedures that may be performed by a mobile station;
Figure 6 is a flowchart illustrating non-limiting, example procedures that may be performed by a radio access network;
Figure 7 is a non-limiting example of a special neighbor cell list;
Figure 8 is another example of a special neighbor cell list; and
Figure 9 is non-limiting example signaling diagram.

### DETAILED DESCRIPTION

In the following description, for purposes of explanation and non-limitation, specific details are set forth, such as particular nodes, functional entities, techniques, protocols, standards, etc. in order to provide an understanding of the described technology. In other instances, detailed descriptions of well-known methods, devices, techniques, etc. are omitted so as not to obscure the description with unnecessary detail. Individual function blocks are shown in the figures. Those skilled in the art will appreciate that the functions of those blocks may be implemented using individual hardware circuits, using software programs and data in conjunction with a suitably programmed microprocessor or general purpose computer, using applications specific integrated circuitry (ASIC), programmable logic arrays, and/or using one or more digital signal processors (DSPs). It will be apparent to one skilled in the art that other embodiments may be practiced apart from the specific details disclosed below.

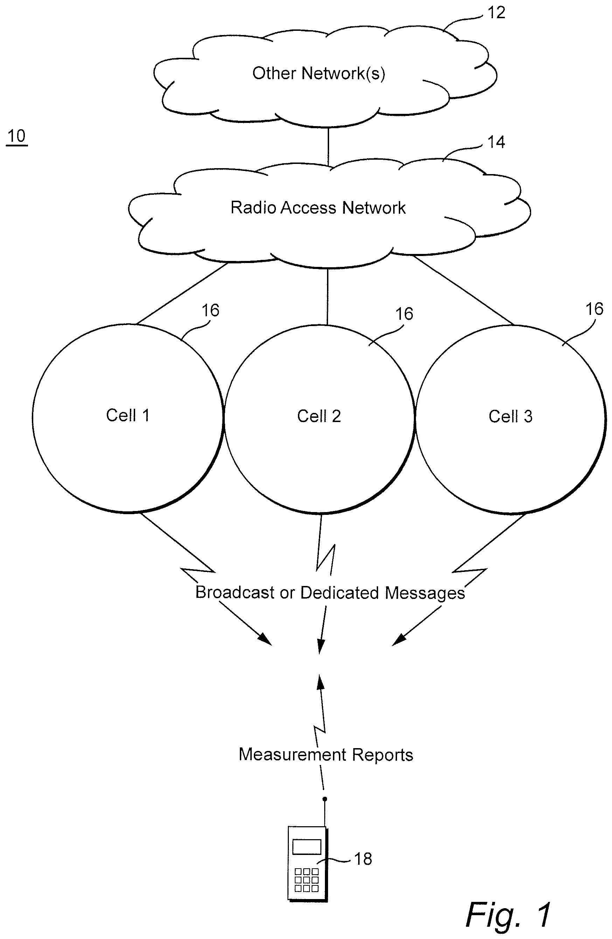

Figure 1 illustrates a cellular communication system 10 that includes one or more networks 12 coupled to a radio access network (RAN) 14. The radio access network 14 supports multiple cells 16, examples of which are labeled as cells 1, 2, and 3. Each cell regularly broadcasts a system information message that various mobile stations 18 doing mobile-based mobility scan for and may detect if there are in range. In-range mobile stations 18 also detect the signal strength of such broadcast messages to determine whether such a cell may become a candidate for measurement reporting when network-controlled mobility is used or for cell re-selection when mobile-based mobility is used. Such cell strength measurement reports are sent by the mobile radios to the radio access network 14 for handover processing, power setting, radio resource allocation or any other Radio Resource Management (RRM) functions that might benefit from having this information distributed to the radio access network 14. Instead of sending a neighbor cell list that includes all neighboring cells to mobile stations in broadcast messages as is commonly done by each cell in modern cellular systems, each cell in the radio access network 14 regularly broadcasts a much smaller list of "special neighbor" cells that should be treated in a special way. For network-controlled mobility, instead of a broadcast message carrying the list of special neighbor cells, such a list may be sent with a dedicated message to each mobile station.

A special neighboring cells list may include, for example, forbidden cells for which cell reselection or handover base measurement reports are forbidden. These forbidden cells may also be referred to as non-neighbor cells. A special neighbor cell list may also include, for example, a special selectable cell that uses special parameterization related to cell reselection and measurement reports not used by other neighboring cells not included in the list. Other neighboring cells not listed in the special neighbor cell list can still be selected by mobile stations if they satisfy certain re-selection criteria. Non listed cells use a default parameter (s) set. In this way, only a limited number of special neighbor cells are listed and transmitted because it is useful for the mobile station to receive such information. Otherwise, the mobile is free to monitor and select any available neighboring cell that it detects.

Non-limiting examples of special cell parameters include an individual cell offset in which a positive or negative value is added to the signal strength measurement in order to improve or discourage its chances of selection with respect to the current serving cell. Some example reasons for associating an individual offset with a particular cell include:
1: to adjust for a feeder loss difference, where a cell with larger feeder loss sends with less power on the radio interface as compared to a cell with lower feeder loss;
2: to compensate for an uplink/downlink imbalance where the mobiles measured signal strength value in the downlink is adjusted by the offset to take into account uplink radio propagation conditions;
3: to discourage selection of an indoor cell located inside a building when the mobile is actually located outside the building;
4: to discourage cells that are very far away but have a clear line of sight, e.g., over a significant body of water;
5: to promote selection of large cells in a small cell/large cell regions.

Another example special cell parameter is base station transmission power. When a region includes base stations with both small and large cells, small cell base station hardware is often used to transmit signals with lower output powers compared to base station hardware serving large cells. In a small and large cell environment, a mobile station evaluating a re-selection criteria based on pathloss between the base station and the mobile station needs to have the base station transmission (Tx) power to perform the pathloss calculation: Pathloss in dB = Tx power
- Measured signal power. Using pathloss prevents a base station with higher transmission power from receiving too high a value in the evaluation as compared to doing the evaluation only based on measured signal power.

Yet another example of a special cell parameter relates to antenna configurations, a special parameter would encourage the use of more sophisticated antenna configurations such as those that employ MIMO antenna schemes transmission and/or received diversity schemes, etc. When evaluating the quality of the signal from a base station with an advanced antenna configuration, such as a MIMO configuration, the mobile station might want to take the correct antenna configuration into account when making measurements to avoid distorting the reported channel quality estimates.

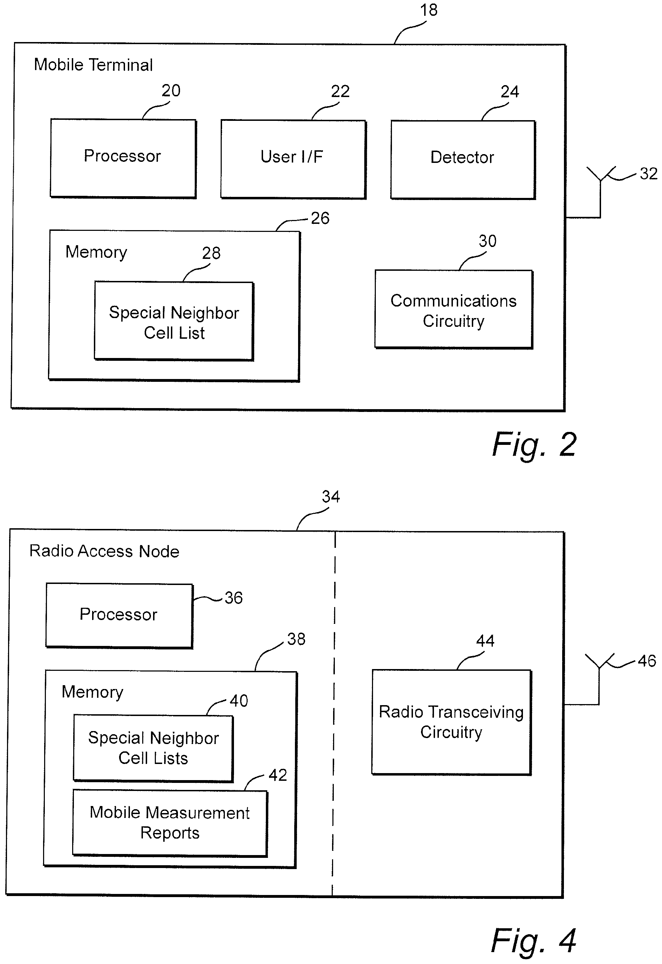

Figure 2 is a function block diagram of a mobile terminal 18 that may be employed to implement this technology in one example. A processor 20 is coupled to a user interface 22 (e.g., including a display, speaker, microphone, keypad, etc.), a signal detector 24, a memory 26, and communications circuitry 30 which is coupled to an antenna 32. The processor 20 controls the overall operation of the mobile terminal 18 and coordinates the operations of the various function blocks. The detector 24 detects a broadcast signal and its signal strength from the cell currently serving the mobile radio 18. The detector 24 may also detect dedicated messages if network-controlled mobility is used. The broadcast list may be broadcast in a form that is detectable by any mobile radio regardless of subscription. Alternatively, that list may be encrypted or otherwise coated so that only subscriber mobile stations can detect and utilize it. The detector 24 or the processor 20 may detect or determine a special neighbor cell list 28 from the broadcast signal or dedicated message in the serving cell which is preferably stored and maintained in the memory 26. Based on that special neighbor cell list 28, the mobile radio 18 determines one or more neighbor cells to monitor (e.g., measure) and send signals to (e.g., cell selection or registration messages to generate an associated measurement report (e.g., of detected signal strength) related to signals sent from the neighboring cell(s). The mobile 18 then sends such signals to the radio network via communications circuitry 30 at a desired time or time interval or when a triggering event occurs.

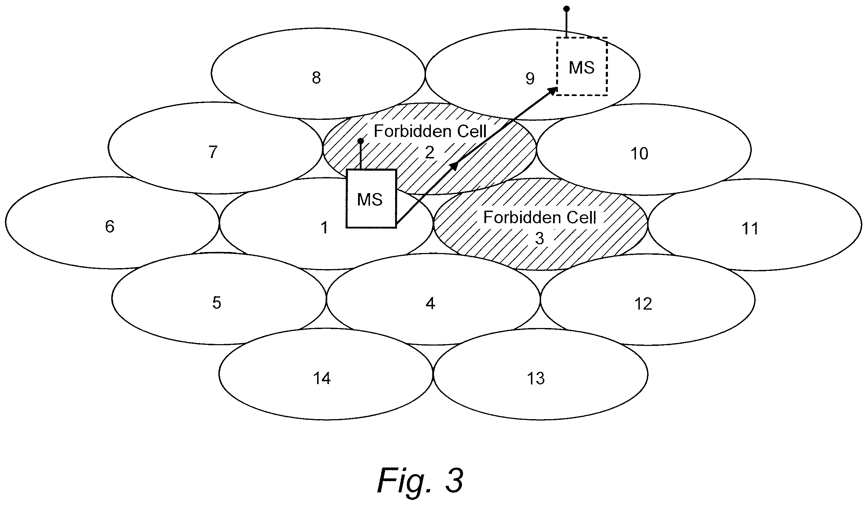

As mentioned above, the special neighbor cell list includes one or more prohibited or forbidden cells that the mobile radio is prohibited from obtaining service. An example is shown in Figure 3 which illustrates a number of neighboring cells 1-14 where the mobile station is being currently served in cell No. 1. In this simple example, a special neighbor cell list is broadcast or sent with a dedicated message. The list includes information that neighboring cells 2 and 3 are forbidden cells. Because the mobile radio knows from the list that it is forbidden from obtaining service from either cell 1 or cell 2, the mobile radio makes no attempt to send signals to or monitor signals for measurement reporting associated with cells 2 and 3. On the other hand, the mobile radio is free to request service from any available neighboring cell that is not listed including one of cells 4 through 14. In the example, the mobile station moves through forbidden cell 1 and requests service from neighboring cell 9. Because there is no need for the mobile radio to receive a neighbor cell list that includes ordinary (non-special), available neighboring cells, considerably less information that is conveyed in the special neighbor cell list broadcast over the air interface. The special neighbor list may also include one or more special selectable cells that the mobile radio may obtain service from if one or more additional special cell selection parameters or conditions is met. The broadcast signal is detected from a special selectable cell on the list, a measurement report generated for that special selectable cell, and the measurement report sent to a radio access network.

Figure 4 is a function block diagram illustrating an example radio access node 34 that may be used to generate and broadcast a special neighbor cell list from a cell. As an alternative the special neighbor cell list from a cell may be sent with a dedicated message to specific mobile stations. The radio access node 34 is shown as a single node entity which may be implemented for example in a radio base station (BS) or access point (AP). However, it may be desirable to distribute functionality performed in the radio access node to choose separate network nodes, which is indicated by the dotted line. In that case, functionality to the left of the dashed line is performed in a node separate from the node that ultimately transmits and receives information over air interface representative functionality in the radio transceiving block 44 shown to the right of the dashed line. The radio transceiving circuitry 44 is coupled to one or more antennas 46. A processor 36 is coupled to a memory 38 and may be coupled to the radio transceiving circuitry 44 if the radio access node 34 is a single node. Multiple special neighbor cell lists 40 are generated, one for each cell for mobile-based mobility and one for each mobile station for network-controlled mobility, and stored in the memory 48. The list then can either be a special neighbor cell list broadcast to all mobiles in one cell or a special neighbor cell list sent to one mobile station via dedicated message. As explained above and further below, the special neighbor cell lists are constructed so that only special information relating to neighbor cell lists is provided in serving cells. For cells that mobile stations are actively monitoring cells related to their respective special neighbor cell list, those mobiles measure the downlink signal quality or signal strength of broadcast signals from those neighbor cells and provide measurement reports to the radio access node 34 for handover related operations. Measurement reports are only generated and sent by mobiles for non-forbidden cells. Non-forbidden cells could either be cells not listed in the special neighbor list or cells that are listed on a special neighbor list and require special parameterization as described further below.

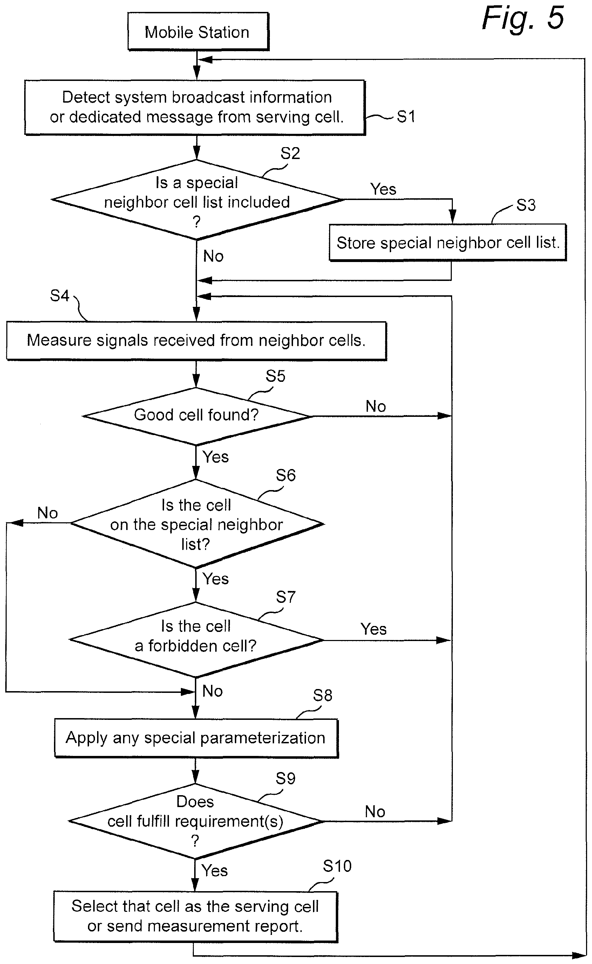

Figure 5 is an example flowchart diagram that may be performed by the mobile station 18. The mobile station detects system broadcast information or dedicated messages from its serving cell (step S1). A decision is made in step S2 whether a special neighbor cell list is included in that information or message. If so, the mobile station stores the special neighbor cell list in its memory (step S3). If not, or after storing the special neighbor cell list, the mobile station measures signals received from neighbor cells (step S4). A decision is made in step S5 whether a "good" cell is detected. A good cell is one that can become a potential serving cell or potential handover candidate based upon its downlink signal strength/quality and possibly one or more other factors. A decision is made whether the good cell is on the mobile's special neighbor cell list (step S6). If so, a further decision is made in step S7 whether the good cell is a forbidden cell. If so, the procedure returns, as it does if no good cell is found, back to step S4 to continue measurement of signals received from neighboring cells. In step S4, the mobile station can now avoid spending measurement and processing resources on a cell identified as forbidden, and instead, can apply those resources on non-forbidden cells.

On the other hand, if the good cell is not forbidden, the mobile applies any special parameterization which may qualify or guide selection/reselection of the cell by the mobile station. A decision is made whether the good cell fulfills one or more requirement(s), e.g., whether that the cell is better than the current cell or whether the cell is within a certain dB range below the current cell, the second best (or third or fourth...) best cell. If not, the procedure returns to step S4 for continued measurement of cell broadcast signals. If the cell does fulfill those requirement(s), then the mobile station selects or reselects that cell as its serving cell (step S10) if in idle mode for mobile-based mobility, or if the mobile station is not in idle mode and there is network-controlled mobility, a measurement report is sent back to the radio access network associated with this selected cell. Alternatively, the mobile station may gather several cell measurement reports together in one transmission.

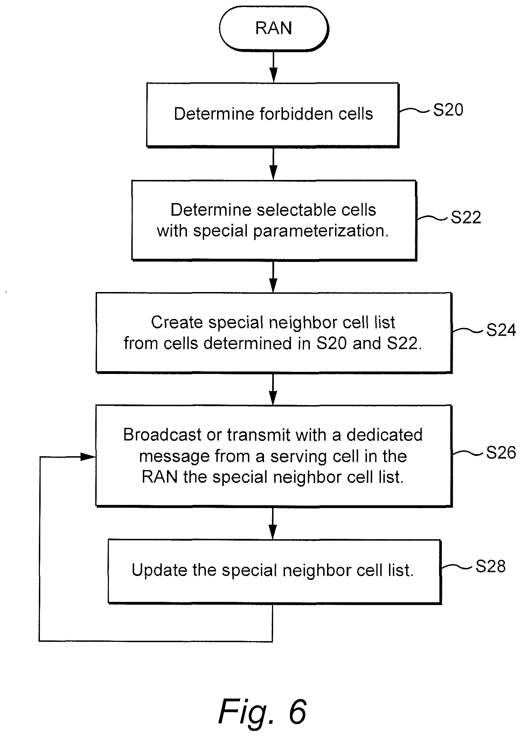

Figure 6 is a flowchart outlining non-limiting, example procedures that may be performed by the radio access network (RAN) in accordance with this technology. Initially, a list of one or more forbidden cells is determined (step S20). These cells may be forbidden for a variety of reasons such as various roaming restrictions, a particularly high load in one or more of those forbidden cells, other subscription restrictions, the cell is currently under testing, repair, or upgrade, etc. On the other hand, those special selectable cells which are available in the network but which have some special parameterization are also determined (step S22). Unlike the majority of neighboring cells, these special selectable cells may have one or more qualifying or guiding parameters, e.g., an individual offset, antenna configuration, etc., that the network wants to use to differentiate these cells from the majority of cells that have a default set of parameters.

The special neighbor cell list is then created from the cells which were determined in steps S20 and S22 (step S24). A serving cell in the radio access network then broadcasts the special neighbor cell list to mobile stations in or near its cell area (step S26) to be used by mobile stations performing mobile-based mobility. A serving cell in the radio access network may also transmit the special neighbor cell list with a dedicated message to each mobile station associated with this cell using network-controlled mobility. The special neighbor cell list is then updated (step S28) through O&M intervention or triggered by events, or alternatively periodically, for subsequent broadcasts in step S26. Such updates could for example be based on experience and measurement reports from mobile stations. Failed handover attempts to forbidden cells and situations where a mobile station sequentially moves back and forth between cells (ping-ponging) are examples of events that could lead to adjustments of the special neighbor list. In addition, adjustments could be based on computer simulations or other evaluations of network performance.

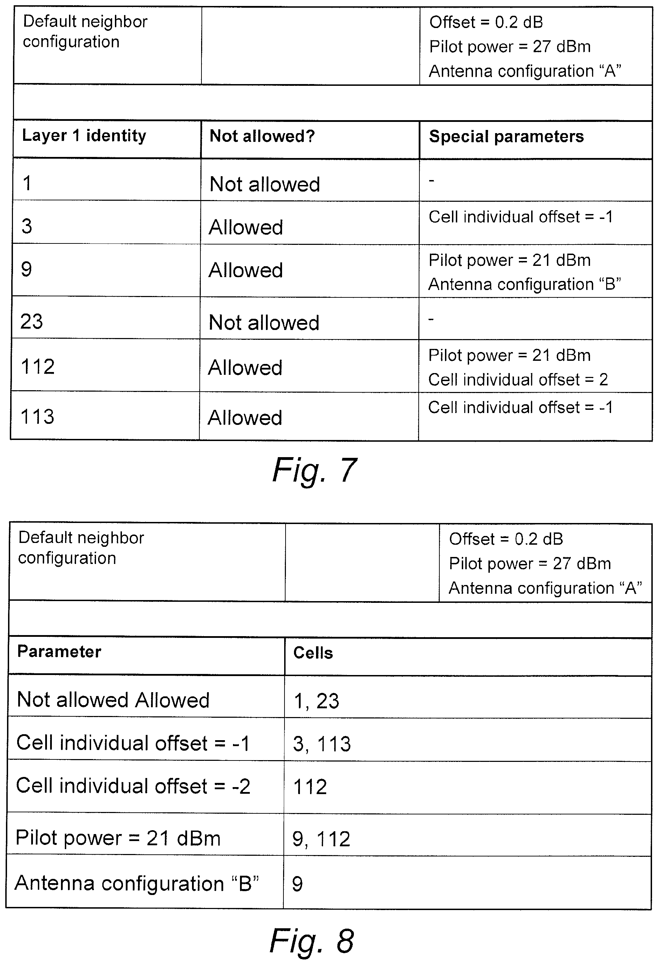

Figure 7 illustrates a non-limiting example of a special neighbor cell list. The list may include a default neighbor cell configuration which in this example includes a default of 0.2 dB offset a broadcast or pilot signal transmission power of 27 dBm, and a standard antenna configuration identified as A. Then the list may include for each special cell, its identity, whether it is allowed or not allowed (forbidden), and whether there is(are) any special parameter(s) associated with that special cell. In this example, both cells 1 and 3 are listed because they are not allowed or forbidden cells. Allowed cells 3, 9, 112 and 113 are included in the list because they have one or more special parameters. Cell 3 has an individual cell offset of -1 dB which slightly decreases the likelihood it will be selected. Cell 9 has a lower pilot power of 21 dBm plus a different antenna configuration B. The lower pilot power means that the cell is less likely to be selected if a pure signal strength evaluation parameter is used. If a pathloss evaluation parameter is used, then the different pilot power values are also needed to calculate pathloss. The antenna configuration B might be needed since a mobile station that monitors cells with different antenna configurations might need this information to correctly evaluate the measured received signal power. Cell 112 also includes a lower pilot power of 21 dBm, which decreases the likelihood of selection, and an individual cell offset of 2, which increases the likelihood of selection. Cell 113 has an individual cell offset of -1 dB which decreases the likelihood it will be selected by a mobile station.

Figure 8 gives another non-limiting example of a special neighbor cell list. The same default neighbor cell configuration information could be provided, if desired. Each special parameter is listed, and the cells are identified for which that parameter applies. This list configuration may be preferred because less information is included to reduce signaling bandwidth and storage requirements.

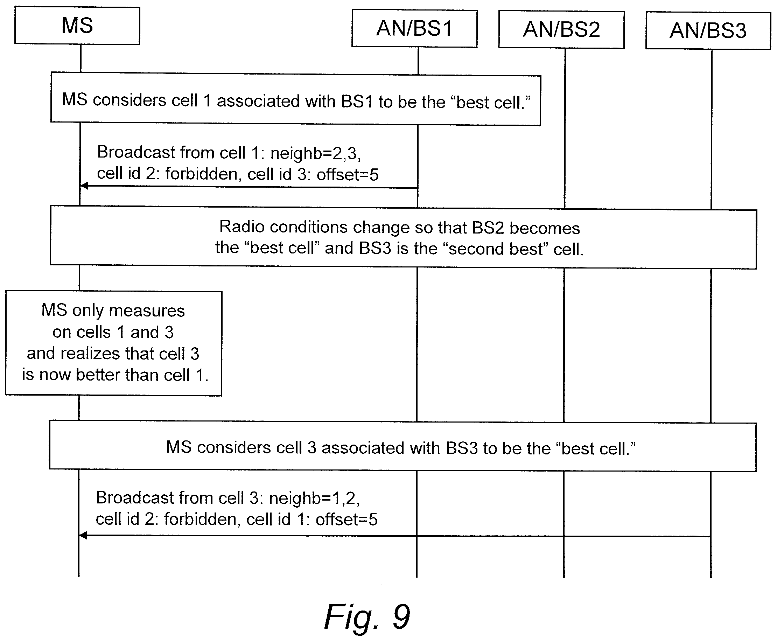

A non-limiting example signaling diagram is shown in Figure 9 that is based on the technology described above with mobile-based mobility. Given downlink broadcast signal measurements from various cells, the mobile station considers that cell 1 associated with base station BS1 is currently its "best cell." Therefore cell 1 becomes its serving cell. The mobile detects the information in the broadcast from cell 1 including the special neighbor cell list which lists cells 2 and 3. Cell 2 is forbidden, and cell 3 has an offset of 5 dB which improves cell 3's chance of being selected by the mobile station. Radio conditions change so that cell 2 becomes the "best cell" and cell 3 the second best cell. But from the earlier broadcast information from cell 1, the mobile station only measures the signal strength of the broadcast signals from cells 1 and 3 because cell 2 is a forbidden cell. The mobile then realizes that cell 3 is a better cell than cell 1. Cell 3 thus becomes the mobiles current serving cell. The mobile station detects the information broadcast from cell 3 including the neighbor cell list which identifies neighbor cells 1 and 2. Again, cell 2 is forbidden and cell 1 has an offset of -5 dB, which decreases the likelihood that it will be selected as a serving cell.

None of the above description should be read as implying that any particular element, step, range, or function is essential such that it must be included in the claims scope. The scope of patented subject matter is defined only by the claims. All structural and functional equivalents to
the elements of the above-described preferred embodiment that are known to those of ordinary skill in the art are expressly intended to be encompassed by the present claims. Moreover, it is not necessary for a device or method to address each and every problem sought to be solved by the present invention, for it to be encompassed by the present claims. Furthermore, no embodiment, feature, component, or step in this specification is intended to be dedicated to the public regardless of whether the embodiment, feature, component, or step is recited in the claims.

## Claims

1. A method implemented in a mobile radio communicating in a cellular radio communications system, comprising
detecting (S1) a broadcast signal or dedicated message from a serving cell currently serving the mobile radio; **characterized by** detecting (S2_Yes), before sending signals to another cell or generating a measurement report associated with another cell, from the broadcast signal or the dedicated message a list of special neighbor cells;
wherein the list includes
one or more prohibited cells that the mobile radio is prohibited from obtaining service, and
one or more special selectable cells that the mobile radio is allowed to obtain service after applying a number of cell-specific parameters;
and wherein the list excludes neighboring cells to the serving cell that are selectable by the mobile radio for service without having to apply the number of cell-specific parameters;
determining (s9_Yes) a cell to select, to send signals to, or to generate an associated measurement report related to signals sent from the identified cell, wherein the mobile radio avoids a prohibited cell on the list; and selecting (S10), sending signals to, or monitoring signals for measurement reporting from the identified cell, wherein the mobile radio avoids monitoring signals from or sending signals to the one or more prohibited cells on the list.

2. The method in claim 1, wherein the list includes one or more special selectable cells that the mobile radio is encouraged to obtain service from, the method further comprising:
storing the list in memory including an identifier associated with each cell in the list and one or more of the following parameters: an allowed cell/not allowed cell indicator, a power offset, and an antenna configuration associated with the cell.

3. Mobile radio apparatus for a mobile radio (18) communicating in a cellular radio communications system (10), comprising a detector (24) configured to detect a broadcast signal or dedicated message from a serving cell currently serving the mobile radio, the mobile radio apparatus **characterized in**
electronic circuitry (20) configured, before performing measurements associated with another cell or generating a measurements report associated with another cell, to determine from the broadcast signal or dedicated message a list of special neighbor cells (28), wherein the list includes
one or more prohibited cells that the mobile radio is prohibited from obtaining service, and
one or more special selectable cells that the mobile radio is allowed to obtain service after applying a number of cell-specific parameters,
and wherein the list excludes neighboring cells to the serving cell that are selectable by the mobile radio for service without having to apply the number of cell-specific parameters;
communications circuitry for sending signals to or monitoring signals from an identified cell,
wherein the detector is configured to avoid monitoring signals from or sending signals to the one or more prohibited cells on the list.

4. A method implemented in a radio access network node (34) for communicating with mobile radios (18) in a cellular radio communications system, **characterized by**
determining (20, 22) a list of special neighbor cells (40) including one or more neighboring cells that mobile radios are forbidden to select, and
one or more selectable neighboring cells that mobile radios may, after application of a number of cell-specific parameters, select, send signals to, or generate an associated measurement report related to signals sent from the selectable neighboring cell from other selectable neighboring cells that the mobile radios can select, send signals to, or generate an associated measurement report related to signals sent from the selectable neighboring cells without having to apply the number of cell-specific parameters, where the other selectable neighboring cells are not included in the list of special neighbor cells, and
broadcasting (26) or sending in a dedicated message the list of special neighbor cells from a serving cell.

5. Apparatus implemented in a radio access network node (34) for communicating with mobile radios (18) in a cellular radio communications system, **characterized in**
a processor (36) for determining a list of special neighbor cells including
one or more neighboring cells that mobile radios are forbidden to select, and
one or more selectable neighboring cells that mobile radios may, after application of a number of cell-specific parameters, select, send signals to, or generate an associated measurement report related to signals sent from the selectable neighboring cell from other selectable neighboring cells that the mobile radios can select, send signals to, or generate an associated measurement report related to signals sent from the selectable neighboring cells without having to apply the number of cell-specific parameters, where the other selectable neighboring cells are not included in the list of special neighbor cells, and
a radio transmitter (44) for sending the list of special neighbor cells from a serving cell.

## Patentansprüche

1. Verfahren, das in einer Mobilfunkvorrichtung implementiert ist, die in einem zellulären Funkkommunikationssystem kommuniziert, wobei das Verfahren Folgendes umfasst:
Erfassen (S1) eines Rundfunksignals oder einer dedizierten Nachricht von einer bedienenden Zelle, die derzeit die Mobilfunkvorrichtung bedient; **gekennzeichnet durch**
Erfassen (S2_Yes), aus dem Rundfunksignal oder der dedizierten Nachricht einer Liste spezieller Nachbarzellen vor dem Senden von Signalen an eine andere Zelle oder dem Erzeugen eines Messberichts, der einer anderen Zelle zugeordnet ist,
wobei die Liste Folgendes umfasst:
eine oder mehrere untersagte Zellen, von denen die Mobilfunkvorrichtung keine Dienste erhalten darf, und
eine oder mehrere spezielle auswählbare Zellen, von denen die Mobilfunkvorrichtung nach dem Anwenden einer Anzahl von zellenspezifischen Parametern Dienste erhalten darf;
und wobei die Liste benachbarte Zellen für die bedienende Zelle ausschließt, die durch die Mobilfunkvorrichtung für den Dienst auswählbar sind, ohne die Anzahl von zellenspezifischen Parametern anwenden zu müssen;
Bestimmen (S9_Yes) einer auszuwählenden Zelle, des Sendens von Signalen, oder des Erzeugens eines zugehörigen Messberichts in Bezug auf Signale, die von der identifizierten Zelle gesendet werden, wobei die Mobilfunkvorrichtung eine untersagte Zelle auf der Liste vermeidet; und
Auswählen (S10), des Sendens von Signalen oder des Überwachens von Signalen für die Messberichterstattung von der identifizierten Zelle, wobei die Mobilfunkvorrichtung das Überwachen von Signalen von oder das Senden von Signalen an die eine oder die mehreren untersagten Zellen auf der Liste vermeidet.

2. Verfahren nach Anspruch 1, wobei die Liste eine oder mehrere spezielle auswählbare Zellen umfasst, von denen die Mobilfunkvorrichtung Dienste erhalten soll, wobei das Verfahren ferner Folgendes umfasst:
Speichern der Liste im Speicher einschließlich einer Kennung, die jeder Zelle in der Liste zugeordnet ist, und eines oder mehrerer der folgenden Parameter: eines Indikators einer erlaubten Zelle/nicht erlaubten Zelle, eines Leistungsversatzes und einer Antennenkonfiguration, die der Zelle zugeordnet ist.

3. Mobilfunkapparat für eine Mobilfunkvorrichtung (18), die in einem zellulären Funkkommunikationssystem (10) kommuniziert, wobei der Apparat Folgendes umfasst:
einen Detektor (24), der dafür konfiguriert ist, ein Rundfunksignal oder eine dedizierte Nachricht von einer bedienenden Zelle zu erfassen, die derzeit die Mobilfunkvorrichtung bedient, wobei der Mobilfunkapparat durch Folgendes gekennzeichnet ist:
einen elektronischen Schaltkreis (20), der dafür konfiguriert ist, aus dem Sendesignal oder der dedizierten Nachricht eine Liste spezieller Nachbarzellen (28) zu bestimmen, bevor Messungen durchgeführt werden, die einer anderen Zelle zugeordnet sind, oder ein Messbericht erzeugt wird, der einer anderen Zelle zugeordnet ist,
wobei die Liste Folgendes umfasst:
eine oder mehrere untersagte Zellen, von denen die Mobilfunkvorrichtung keine Dienste erhalten darf, und
eine oder mehrere spezielle auswählbare Zellen, von denen die Mobilfunkvorrichtung nach dem Anwenden einer Anzahl von zellenspezifischen Parametern Dienste erhalten darf,
und wobei die Liste benachbarte Zellen für die bedienende Zelle ausschließt, die durch die Mobilfunkvorrichtung für den Dienst auswählbar sind, ohne die Anzahl von zellenspezifischen Parametern anwenden zu müssen;
einen Kommunikationsschaltkreis zum Senden von Signalen an oder zum Überwachen von Signalen von einer identifizierten Zelle,
wobei der Detektor dafür konfiguriert ist, das Überwachen von Signalen von oder das Senden von Signalen an die eine oder die mehreren untersagten Zellen auf der Liste zu vermeiden.

4. Verfahren, das in einem Funkzugriffsnetzwerkknoten (34) zum Kommunizieren mit Mobilfunkvorrichtungen (18) in einem zellulären Funkkommunikationssystem implementiert ist, wobei das Verfahren durch Folgendes gekennzeichnet ist:
Bestimmen (20, 22) einer Liste von speziellen Nachbarzellen (40), die Folgendes umfasst:
eine oder mehrere benachbarte Zellen, die von mobilen Funkvorrichtungen nicht ausgewählt werden dürfen, und
eine oder mehrere auswählbare Nachbarzellen, die Mobilfunkvorrichtungen nach Anwendung einer Reihe von zellspezifischen Parametern auswählen können, zu denen sie Signale senden können, oder einen zugehörigen Messbericht in Bezug auf Signale, die von der auswählbaren Nachbarzelle gesendet werden, von anderen auswählbaren Nachbarzellen erzeugen können, die die mobilen Funkvorrichtungen auswählen können, zu denen sie Signale senden können, oder einen zugehörigen Messbericht in Bezug auf Signale, die von den auswählbaren Nachbarzellen gesendet werden, erzeugen können, ohne die Anzahl der zellspezifischen Parameter anwenden zu müssen, wenn die anderen auswählbaren Nachbarzellen nicht in der Liste der speziellen Nachbarzellen enthalten sind, und
Übermitteln (26) oder Senden der Liste von speziellen Nachbarzellen von einer bedienenden Zelle in einer dedizierten Nachricht.

5. Apparat, der in einem Funkzugriffsnetzwerkknoten (34) zum Kommunizieren mit Mobilfunkvorrichtungen (18) in einem zellulären Funkkommunikationssystem implementiert ist, wobei der Apparat durch Folgendes gekennzeichnet ist:
einen Prozessor (36) zum Bestimmen einer Liste von speziellen Nachbarzellen, die Folgendes umfassen:
eine oder mehrere benachbarte Zellen, die von mobilen Funkvorrichtungen nicht ausgewählt werden dürfen, und
eine oder mehrere auswählbare Nachbarzellen, die Mobilfunkvorrichtungen nach Anwendung einer Reihe von zellspezifischen Parametern auswählen können, zu denen sie Signale senden können, oder einen zugehörigen Messbericht in Bezug auf Signale, die von der auswählbaren Nachbarzelle gesendet werden, von anderen auswählbaren Nachbarzellen erzeugen können, die die mobilen Funkvorrichtungen auswählen können, zu denen sie Signale senden können, oder einen zugehörigen Messbericht in Bezug auf Signale, die von den auswählbaren Nachbarzellen gesendet werden, erzeugen können, ohne die Anzahl der zellspezifischen Parameter anwenden zu müssen, wenn die anderen auswählbaren Nachbarzellen nicht in der Liste der speziellen Nachbarzellen enthalten sind, und
einen Funksender (44) zum Senden der Liste spezieller Nachbarzellen von einer bedienenden Zelle.

## Revendications

1. Procédé mis en oeuvre dans une radio mobile qui communique dans un système de communication radiocellulaire, comprenant :
la détection (S1) d'un signal de diffusion ou d'un message dédié qui provient d'une cellule de desserte qui dessert présentement la radio mobile ; **caractérisé par** :
la détection (S2_Yes), avant l'envoi de signaux à une autre cellule ou la génération d'un rapport de mesure qui est associé à une autre cellule, à partir du signal de diffusion ou du message dédié, d'une liste de cellules voisines spéciales ;
dans lequel la liste inclut :
une ou plusieurs cellule(s) interdite(s) auprès de laquelle ou desquelles la radio mobile se voit interdire d'obtenir un service ; et
une ou plusieurs cellule(s) sélectionnable(s) spéciale(s) auprès de laquelle ou desquelles la radio mobile est autorisée à obtenir un service après l'application d'un certain nombre de paramètres spécifiques cellule ;
et dans lequel la liste exclut des cellules voisines pour la cellule de desserte qui peuvent être sélectionnées par la radio mobile pour un service sans avoir à appliquer le nombre de paramètres spécifiques de cellule;
la détermination (S9_Yes) d'une cellule sélectionnable, de l'envoi de signaux ou de la génération d'un rapport de mesure associé en rapport aux signaux qui sont envoyés depuis la cellule identifiée, dans lequel la radio mobile évite une cellule interdite sur la liste ; et
la sélection (S10) de l'envoi de signaux ou de la surveillance de signaux pour un rapport de mesure provenant de la cellule identifiée, dans lequel la radio mobile évite de surveiller des signaux qui proviennent des une ou plusieurs cellules interdites sur la liste ou d'envoyer des signaux sur ces mêmes une ou plusieurs cellules interdites sur la liste.

2. Procédé selon la revendication 1, dans lequel la liste inclut une ou plusieurs cellule(s) sélectionnable(s) spéciale(s) auprès de laquelle ou desquelles la radio mobile est encouragée à obtenir un service, le procédé comprenant en outre :
le stockage de la liste dans une mémoire incluant un identifiant qui est associé à chaque cellule dans la liste et un ou plusieurs des paramètres qui suivent : un indicateur de cellule autorisée/cellule non autorisée, un décalage de puissance et une configuration d'antenne(s) qui est associée à la cellule.

3. Appareil radio mobile pour une radio mobile (18) qui communique dans un système de communication radiocellulaire (10), comprenant :
un détecteur (24) qui est configuré de manière à ce qu'il détecte un signal de diffusion ou un message dédié qui provient d'une cellule de desserte qui dessert présentement la radio mobile, l'appareil radio mobile étant **caractérisé par** :
un circuit électronique (20) qui est configuré, avant de réaliser des mesures qui sont associées à une autre cellule ou de générer un rapport de mesure qui est associé à une autre cellule, de manière à ce qu'il détermine, à partir du signal de diffusion ou du message dédié, une liste de cellules voisines spéciales (28) ;
dans lequel la liste inclut :
une ou plusieurs cellule(s) interdite(s) auprès de laquelle ou desquelles la radio mobile se voit interdire d'obtenir un service ; et
une ou plusieurs cellule(s) sélectionnable(s) spéciale(s) auprès de laquelle ou desquelles la radio mobile est autorisée à obtenir un service après l'application d'un certain nombre de paramètres spécifiques de cellule ;
et dans lequel la liste exclut des cellules voisines pour la cellule de desserte qui sont sélectionnables par la radio mobile pour un service sans avoir à appliquer le nombre de paramètres spécifiques de cellule ;
un circuit de communication pour envoyer des signaux sur une cellule identifiée ou pour surveiller des signaux qui proviennent d'une cellule identifiée ;
dans lequel le détecteur est configuré de manière à ce qu'il évite de surveiller des signaux qui proviennent des une ou plusieurs cellules interdites sur la liste ou d'envoyer des signaux sur ces mêmes une ou plusieurs cellules interdites sur la liste.

4. Procédé mis en oeuvre dans un noeud de réseau d'accès radio (34) pour communiquer avec des radios mobiles (18) dans un système de communication radiocellulaire, **caractérisé par** :
la détermination (20, 22) d'une liste de cellules voisines spéciales (40) qui inclut :
une ou plusieurs cellule(s) voisine(s) que des radios mobiles se voient interdire de sélectionner ; et
une ou plusieurs cellule(s) voisine(s) sélectionnable(s) que des radios mobiles peuvent, après l'application d'un certain nombre de paramètres spécifiques de cellule, sélectionner, sur laquelle ou lesquelles des radios mobiles peuvent envoyer des signaux ou pour laquelle ou lesquelles des radios mobiles peuvent générer un rapport de mesure associé par rapport aux signaux qui sont envoyés depuis la cellule voisine sélectionnable, depuis d'autres cellules voisines sélectionnables que les radios mobiles peuvent sélectionner, sur lesquelles les radios mobiles peuvent envoyer des signaux, ou pour lesquelles les radios mobiles peuvent générer un rapport de mesure associé par rapport aux signaux qui sont envoyés depuis les cellules voisines sélectionnables sans avoir à appliquer le nombre de paramètres spécifiques de cellule, où les autres cellules voisines sélectionnables ne sont pas incluses dans la liste de cellules voisines spéciales ; et
la diffusion (26) ou l'envoi, dans un message dédié, de la liste de cellules voisines spéciales depuis une cellule de desserte.

5. Appareil mis en oeuvre dans un noeud de réseau d'accès radio (34) pour communiquer avec des radios mobiles (18) dans un système de communication radiocellulaire, **caractérisé par** :
un processeur (36) pour déterminer une liste de cellules voisines spéciales qui inclut :
une ou plusieurs cellule(s) voisine(s) que des radios mobiles se voient interdire de sélectionner ; et
une ou plusieurs cellule(s) voisine(s) sélectionnable(s) que des radios mobiles peuvent, après l'application d'un certain nombre de paramètres spécifiques de cellule, sélectionner, sur laquelle ou lesquelles des radios mobiles peuvent envoyer des signaux ou pour laquelle ou lesquelles des radios mobiles peuvent générer un rapport de mesure en rapport aux signaux qui sont envoyés depuis la cellule voisine sélectionnable, depuis d'autres cellules voisines sélectionnables que les radios mobiles peuvent sélectionner, sur lesquelles les radios mobiles peuvent envoyer des signaux, ou pour lesquelles les radios mobiles peuvent générer un rapport de mesure associé en rapport aux signaux qui sont envoyés depuis les cellules voisines sélectionnables sans avoir à appliquer le nombre de paramètres spécifiques de cellule, où les autres cellules voisines sélectionnables ne sont pas incluses dans la liste de cellules voisines spéciales ; et
un émetteur radio (44) pour envoyer la liste de cellules voisines spéciales depuis une cellule de desserte.
